# EUROPEAN PATENT APPLICATION

(11) **EP 4 730 482 A1**
(43) Date of publication of application: **22.04.2026**
(21) Application number: 25192211.8
(22) Date of filing: 28.07.2025
(51) Int. Cl.: H01M 10/613, H01M 10/647, H01M 10/6556, H01M 10/6557, H01M 10/656, H01M 50/209, A62C 3/16

(54) **BATTERY MODULE**

(30) Priority: 16.10.2024 KR 20240141501
(71) Applicant: SAMSUNG SDI CO., LTD., Yongin-si, Gyeonggi-do 17084 (KR)
(72) Inventor: JANG, Taewoong, 17084 Yongin-si (KR)
(74) Representative: Marks & Clerk LLP

(57) **Abstract**

A battery module, including a plurality of battery cell units, each battery cell unit having a plurality of battery cells in parallel in a first direction, the plurality of battery cell units aligned in a second direction perpendicular to the first direction, a housing accommodating the plurality of battery cell units, the housing including a bottom plate, a first plate between the plurality of cell units and the bottom plate, the first plate including a first flow path, and a second plate between the plurality of cell units, the second plate including a second flow path connected to the first flow path, wherein a same fire-extinguishing agent flows in the first flow path and the second flow path.

## Description

### BACKGROUND

### 1. Field

The present disclosure relates to a battery module.

### 2. Description of the Related Art

A secondary battery may be charged and discharged, unlike a primary battery that is not rechargeable. A secondary battery of low capacity is used in a small-sized electronic device that is portable such as a smartphone, a feature phone, a laptop computer, a digital camera, and a camcorder, and a secondary battery of large capacity is widely used as a power source for driving a motor in a hybrid vehicle, an electric vehicle, etc. and as a battery for storing electric power. The secondary battery includes an electrode assembly including a cathode and an anode, a case accommodating the electrode assembly, and an electrode terminal connected to the electrode assembly.

The above information disclosed in this background section is only for enhancement of understanding of the background of the disclosure and therefore it may contain information that does not form the related art that is already known to a person of ordinary skill in the art.

### SUMMARY

Embodiments include a battery module, including a plurality of battery cell units, each battery cell unit having a plurality of battery cells in parallel in a first direction, the plurality of battery cell units aligned in a second direction perpendicular to the first direction, a housing accommodating the plurality of battery cell units, the housing including a bottom plate, a first plate between the plurality of cell units and the bottom plate, the first plate including a first flow path, and a second plate between the plurality of cell units, the second plate including a second flow path connected to the first flow path, wherein a same fire-extinguishing agent flows in the first flow path and the second flow path.

The battery module may further include a supply portion connected to the first flow path, the supply portion supplying the fire-extinguishing agent.

The battery module may further include a pressure sensor between the supply portion and the first flow path.

The pressure sensor may be at an outlet of the first flow path.

The second flow path may extend between the plurality of cell units in a direction parallel to the first direction, the second flow path being fixed to the second plate.

The second flow path may be exposed to an exterior of the second plate.

The second flow path may be between 30% to 90% of a height of each of the plurality of cell units.

The second plate may further include a plurality of insulating units partially covering the second flow path, the plurality of insulating units being spaced apart.

The second plate may be perpendicular to the first plate.

The second flow path may be configured to spray the fire-extinguishing agent, for example when a temperature of the battery module increases.

Embodiments include a battery module, including a plurality of battery cell units, each battery cell unit having a plurality of battery cells in parallel in a first direction, the plurality of battery cell units aligned in a second direction perpendicular to the first direction, a housing accommodating the plurality of battery cell units, the housing including a bottom plate, a first plate between the plurality of cell units and the bottom plate, the first plate including a first flow path for a fire-extinguishing agent to flow, a supply portion connected to the first flow path, the supply portion supplying the fire-extinguishing agent, and a pressure sensor between the supply portion and an outlet of the first flow path.

The battery module may further include a second plate between the plurality of cell units, the second plate including a second flow path connected to the first flow path.

The second plate may be perpendicular to the first plate.

The same fire-extinguishing agent flows in the first flow path and the second flow path.

The second flow path may extend between the plurality of cell units in a direction parallel to the first direction, the second flow path being fixed to the second plate.

The second flow path may be exposed to an exterior of the second plate.

The second flow path may be between 30% to 90% of a height of each of the plurality of battery cells.

The second plate may further include a plurality of insulating units partially covering the second flow path, the plurality of insulating units being spaced apart.

A temperature of the fire-extinguishing agent flowing at an inlet side of the first flow path is less than a temperature of the fire-extinguishing agent flowing at an outlet side of the first flow path.

The first plate and the second plate may include a heat dissipating material.

It should be noted that features of the first embodiments defined above may be present on the second embodiments defined above, and vice versa.

At least some of the above and other features of the invention are set out in the claims.

### BRIEF DESCRIPTION OF THE DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawings.

Features will become apparent to those of ordinary skill in the art by describing in detail embodiments with reference to the attached drawings, in which:
FIG. 1 is an exploded perspective view schematically showing an example of a battery module according to one or more embodiments of the present disclosure;
FIG. 2 is a perspective view schematically showing an example of a battery cell in the battery module of FIG. 1;
FIG. 3 is a cross-sectional view of the battery cell taken along a line III-III' of FIG. 2;
FIG. 4 is a perspective view schematically showing an example of a supply portion that is in communication with a first plate in the battery module of FIG. 1;
FIG. 5 is a perspective view schematically showing an example of a first plate and a second plate in the battery module of FIG. 1;
FIG. 6 is a perspective view schematically showing an example of portion A of FIG. 5;
FIG. 7 is a cross-sectional view showing an example of a second plate and a second flow path seen in a first direction (X-axis direction);
FIG. 8 is a cross-sectional view showing another example of a second plate and a second flow path seen in a first direction (X-axis direction); and
FIG. 9 is a cross-sectional view showing still another example of a second plate and a second flow path seen in a first direction (X-axis direction).

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those of ordinary skill in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, one or more embodiments of the present disclosure will be described in detail with reference to accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, it will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

In addition, the accompanying drawings are not shown according to the actual scale to help understand the disclosure, but the dimensions of some components may be exaggerated. Furthermore, the same element in different embodiments may be given the same reference numeral.

Expressions including ordinal numbers such as "first" and "second" indicate various elements, but the above expressions do not limit the elements. These terms are used to distinguish one element from another, and unless the context clearly indicates otherwise, a first element may be a second element.

As used herein, the singular forms are intended to include the plural forms as well, unless the context clearly indicates otherwise.

It will be understood that when an element is referred to being "on (or below)" or "above (or under)" another element, it may be positioned in contact with an upper surface (or a lower surface) of the other element, but another element may be positioned between the element and the other element on (or below) the element.

It will be further understood that when an element is referred to as being "connected", "coupled" or "joined" to another element, the elements may be directly connected or joined to each other, but intervening elements may be present between them or each element may be "connected", "coupled" or "joined" to each other through another element. It will be understood that when an element is referred to as being "electrically coupled" to another element, the element can be directly electrically coupled to another element or intervening elements may be present.

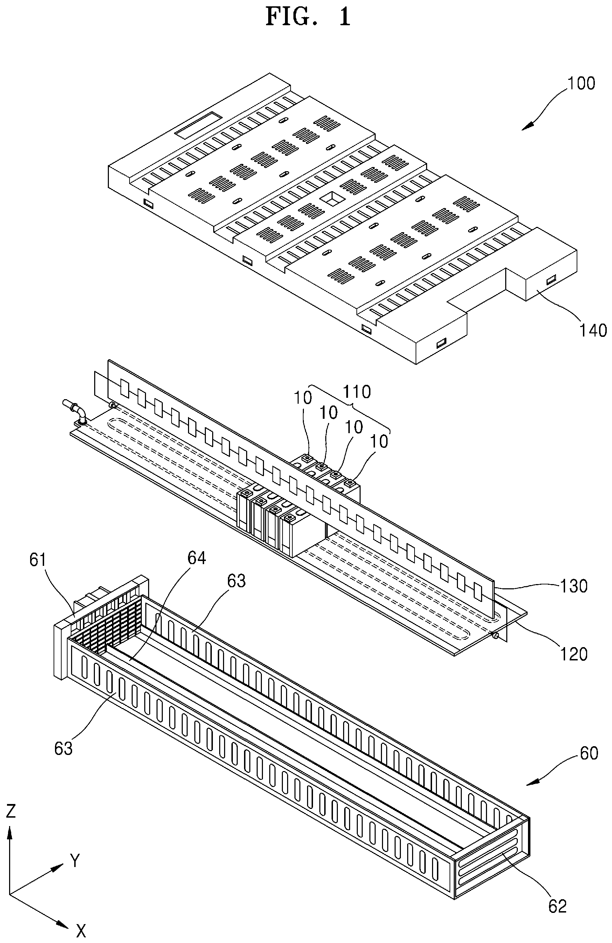

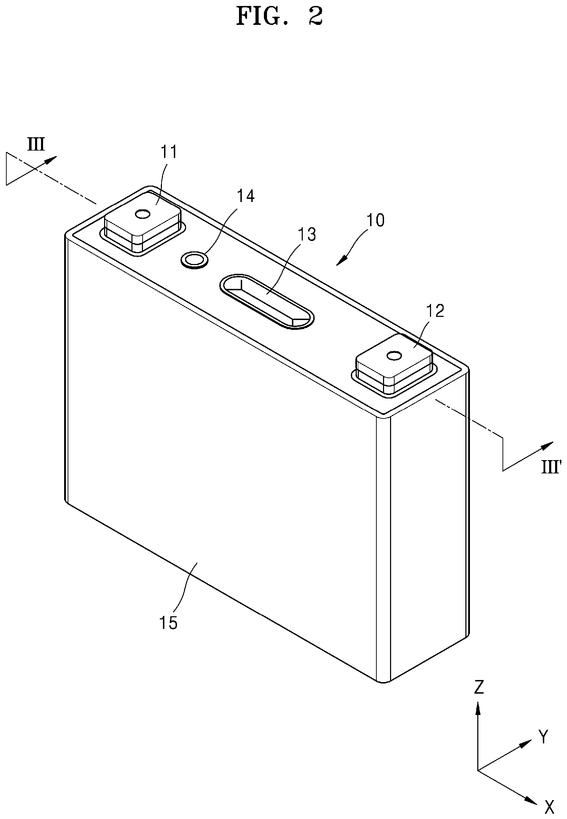

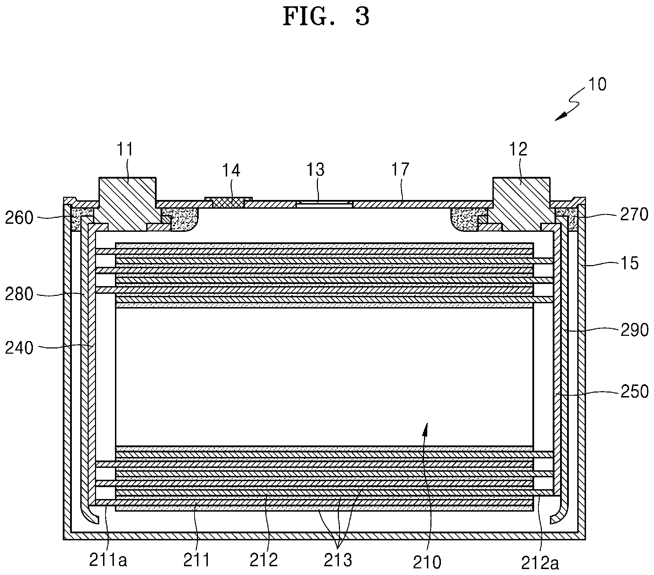

FIG. 1 is an exploded perspective view schematically illustrating an example of a battery module according to one or more embodiments of the present disclosure, FIG. 2 is a perspective view schematically showing an example of a battery cell included in the battery module of FIG. 1, and FIG. 3 is a cross-sectional view of the battery cell schematically showing a cross-section taken along in line III-III' of FIG. 2.

Referring to FIGS. 1 to 3, a battery module 100 according to one or more embodiments of the present disclosure includes terminal portions 11 and 12 including a first terminal 11 and a second terminal 12 on each of a plurality of battery cells 10 arranged in parallel in a first direction (the X-axis direction), and a bus bar electrically connecting any one battery cell 10 and an adjacent battery cell 10 to each other.

The battery cells 10 may each include a battery case 15, an electrode assembly 210 accommodated in the battery case 15, and an electrolyte. The electrode assembly 210 and the electrolyte may electrochemically react and generate energy.

The terminal portions 11 and 12 electrically connect to the bus bar, and a vent 13 (see FIG. 3) that is a discharge passage for a gas generated in the battery cell may be provided on one side of the battery cells 10 (e.g., the top side in the orientation shown in FIG. 2). The terminal portions 11 and 12 of the battery cells 10 may have the first terminal 11 and the second terminal 12 having different polarities. For example, when the first terminal 11 is a positive electrode terminal, the second terminal 12 may be a negative electrode terminal, and in other embodiments, when the first terminal 11 is a negative electrode terminal, the second terminal 12 may be a positive electrode terminal. That is, the first terminal 11 and the second terminal 12 are formed to have different electrical polarities.

The terminal portions 11 and 12 of the adjacent battery cells 10 may be electrically connected to each other in series and/or in parallel via the bus bar. For example, the first terminal 11 of one battery cell 10 may be electrically connected to the second terminal 12 of the adjacent battery cell 10 via the bus bar, and the second terminal 12 of the above one battery cell 10 may be electrically connected to the first terminal 11 of another adjacent battery cell 10 via another bus bar.

In addition, the plurality of battery cells 10 may be arranged in parallel with each other in the first direction (X-axis direction) so that larger surfaces of the battery cells 10 face each other. In addition, the battery module 100 may include cell units 110 arranged in a plurality of columns in a second direction (Y-axis direction) that is perpendicular to the first direction (X-axis direction) in which the plurality of battery cells 10 are arranged. For example, the battery module 100 may include two columns of cell units 110 as shown in FIG. 1, but the number and arrangement of the battery cells 10 may vary as necessary.

The plurality of battery cells 10 may be accommodated by a housing 60. The housing 60 may include a pair of end plates 61 and 62 facing the larger surfaces of the battery cells 10, and side plates 63 and a bottom plate 64 connecting the pair of end plates 61 and 62 to each other.

The side plates 63 support side surfaces of the battery cells 10, and the bottom plate 64 may support bottom surfaces of the battery cells 10. In addition, the pair of end plates 61 and 62, the side plates 63, and the bottom plate 64 may be coupled to one another by members such as bolts, but may be coupled to one another in any way provided that the fastening may be performed.

The end plate 61 applies pressure onto the battery cells 10 or absorbs the pressure due to expansion of the battery cells 10 when the battery cells 10 expand according to charging/discharging operations of the battery cells 10, so as to prevent degradation in performance of the battery cells 10 and improve structural stability of the battery module 100.

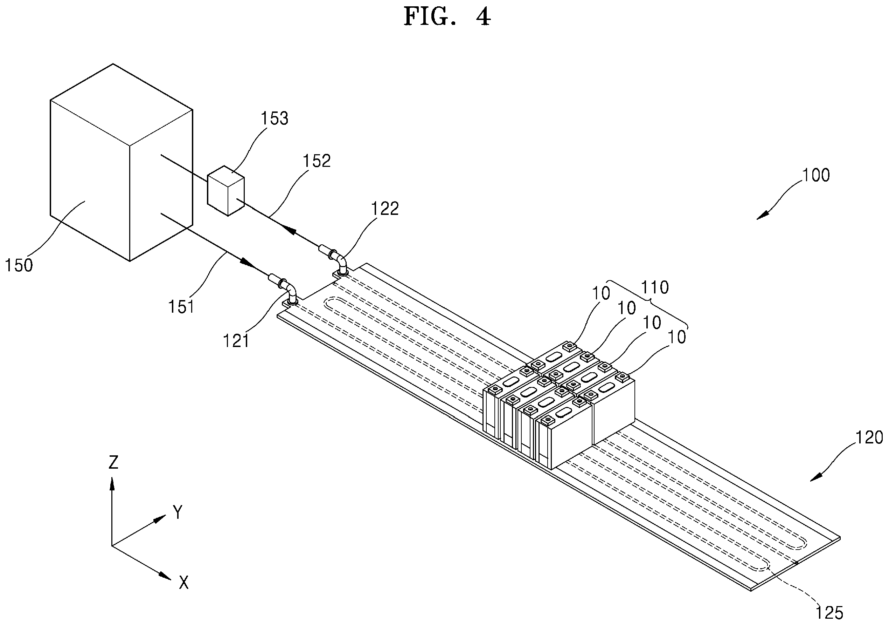

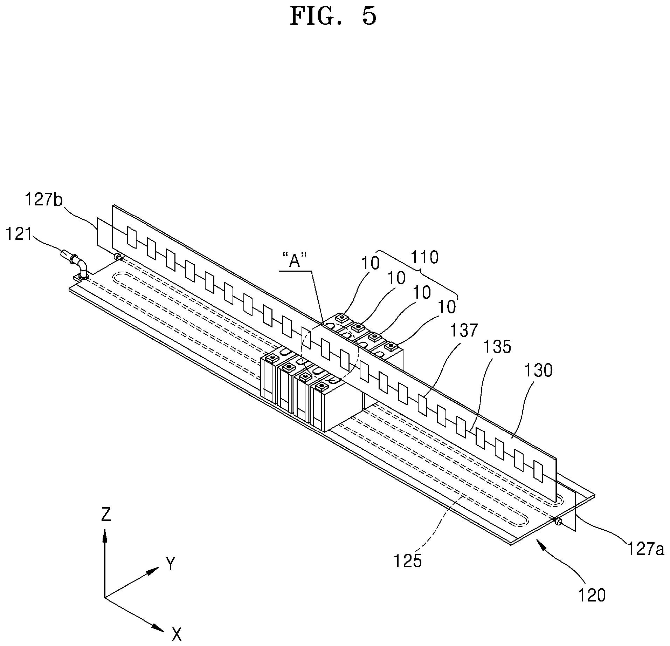

In addition, the battery module 100 may further include a cover portion 140 covering the plurality of cell units 110, a first plate 120 that is located between the plurality of cell units 110 and the bottom plate 64 and includes a first flow path 125 (see FIGS. 1 and 4), and a second plate 130 that is disposed between the plurality of cell units 110 and includes a second flow path 135 (see FIGS. 1 and 5) connected to the first flow path 125. Also, the second plate 130 may be arranged perpendicularly to the first plate 120.

The housing 60 and the cover portion 140 may be coupled to each other via a fastening member such as a bolt, but may be coupled by any type of fastening method. The housing 60 and the cover portion 140 may be coupled to each other to form an internal space, and the plurality of battery cells 10, the first plate 120, and the second plate 130 may be accommodated in the internal space.

Therefore, the housing 60 and the cover portion 140 may include a material that may protect the plurality of battery cells 10, the first plate 120, and the second plate 130 against mechanical impact or thermal impact. The materials included in the housing 60 and cover portion 140 may include, for example, one of acrylonitrile butadiene styrene (ABS), polycarbonate (PC), polypropylene (PP), aluminum, or stainless steel.

In addition, the first plate 120 and the second plate 130 may be heat dissipation plates that distribute the heat generated in the battery module 100. The battery cell 10 may generate heat during charging/discharging processes. When the heat is accumulated, performance of the battery cell 10 degrades and a thermal runaway may occur in the battery module 100.

In the above case, when the first plate 120 and the second plate 130 can distribute the heat generated in the battery module 100, overheating of a certain battery cell 10 may be prevented, and the temperature in the battery module 100 may be uniformly maintained, thereby improving stability of the battery module 100.

Therefore, the first plate 120 and the second plate 130 may include a material having excellent heat dissipation performance and excellent thermal conductivity. For example, the first plate 120 and the second plate 130 may include at least one of aluminum, copper, polyamide (PA), PC, or PP, but the material may vary.

In addition, the battery cell 10 according to the embodiment may include at least one electrode assembly 210 formed by winding a positive electrode 211 and a negative electrode 212 with a separator 213 between the positive electrode 211 and the negative electrode 212, the separator 213 being an insulator, and a case 15 in which the electrode assembly 210 is embedded.

An example in which the battery cell 10 according to the embodiment is a lithium-ion battery cell and is an angular type is described below. However, the present disclosure may be applied to various types of battery cells such as a lithium polymer battery cell, a cylindrical battery cell, etc.

The positive electrode 211 and the negative electrode 212 may each include a coating portion that is a region of a current collector, including metal foil, on which an active material is applied, and an active material-non-coated portion 211a or 212a that is a region not coated with the active material.

The positive electrode 211 and the negative electrode 212 are wound with the separator 213, that is an insulator, while the separator 213 is disposed between the positive and negative electrodes 211 and 212. However, the electrode assembly 210 may instead have a structure in which a positive electrode and a negative electrode, each including a plurality of sheets, are alternately stacked with a separator between the positive and negative electrodes.

The case 15 forms the overall exterior of the battery cell 10 and may include a conductive metal such as aluminum, an aluminum alloy, or steel plated with nickel. Also, the case 15 may provide a space in which the electrode assembly 210 is accommodated.

The battery cell 10 may include a cap plate 17 covering an opening in the case 15, and the case 15 and the cap plate 17 may include a conductive material. Here, the first terminal 11 and the second terminal 12 electrically connected to the positive electrode 211 or the negative electrode 212, may be installed to protrude outward after passing through the cap plate 17.

Also, an outer circumference of an upper pillar of each of the first terminal 11 and the second terminal 12 protruding out of the cap plate 17 may be screw-processed, and may be fixed to the cap plate 17 via a nut.

However, the first terminal 11 and the second terminal 12 may each have a rivet structure to be rivet-coupled or welded to the cap plate 17.

Also, the cap plate 17 includes a thin plate and may be coupled to the opening of the case 15, and the cap plate 17 may have an electrolyte injection port 14 in which a sealing cap may be installed, and the vent 13 may have a notch.

The first terminal 11 and the second terminal 12 may be electrically connected to a current collector including first and second current collectors 240 and 250 (hereinafter, referred to as a positive electrode current collector and a negative electrode current collector) bonded to the positive electrode active material-non-coated portion 211a or the negative electrode active material-non-coated portion 212a via welding.

For example, the first terminal 11 and the second terminal 12 may be coupled to the positive electrode current collector 240 and the negative electrode current collector 250 via welding. However, the first terminal 11, the second terminal 12 and the positive electrode current collector 240 and the negative electrode current collector 250 may be integrally formed with each other.

Also, an insulating member may be installed between the electrode assembly 210 and the cap plate 17. Here, the insulating member may include first and second lower insulating members 260 and 270 which may be each installed between the electrode assembly 210 and the cap plate 17.

Also, according to the embodiment, an end of a separating member that may be installed to face one side surface of the electrode assembly 210 may be installed between the insulating member and the first and second terminals 11 and 12.

Here, the separating member may include first and second separating members 280 and 290.

Therefore, end portions of the first and second separating members 280 and 290 that may be installed to face one surface of the electrode assembly 210 may be installed between the first and second lower insulating members 260 and 270 and the first and second terminals 11 and 12.

Consequently, the first terminal 11 and the second terminal 12 coupled to the positive electrode current collector 240 and the negative electrode current collector 250 via welding may be coupled to the first and second lower insulating members 260 and 270 and the end portions of the first and second separating members 280 and 290.

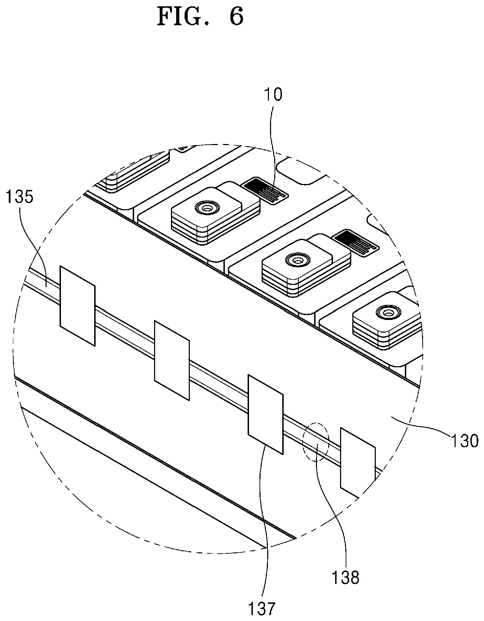

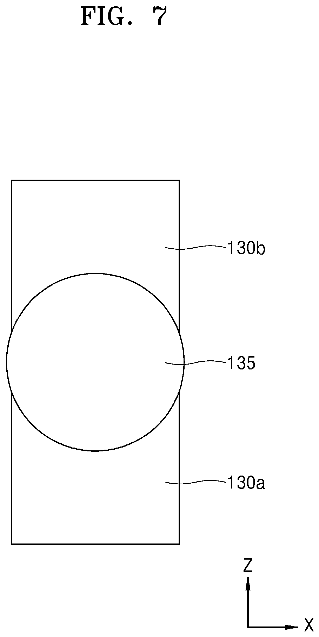

FIG. 4 is a perspective view schematically showing an example of a supply portion that is in communication with the first plate of the battery module in FIG. 1, FIG. 5 is a perspective view schematically showing an example of the first and second plates in the battery module of FIG. 1, FIG. 6 is a perspective view schematically showing an example of portion A in FIG. 5, and FIG. 7 is a cross-sectional view of an example of the second plate and the second flow path seen in the first direction (X-axis direction).

Referring to FIGS. 4 to 6, the battery module 100 may further include a supply portion 150 that is connected to the first flow path 125 to supply a fire-extinguishing agent, and the first plate 120 may further include an inlet 121 through which the fire extinguishing agent flows in and an outlet 122 through which the fire extinguishing agent is discharged. In detail, the supply portion 150 may supply a cold fire-extinguishing agent to the first flow path 125 via the inlet 121 that is in communication with an inlet flow path 151.

The cold fire-extinguishing agent supplied through the inlet 121 may circulate along lower surfaces of the plurality of cell units 110 through the first flow path 125 circulating in the first plate 120.

In detail, the first flow path 125 may extend in the first direction (X-axis direction) between the plurality of cell units 110 and the bottom plate . After that, when the first flow path 125 reaches one end of the first plate 120, the first flow path 125 may be bent in a direction parallel to the first direction (X-axis direction) and then may extend in -x direction. Also, the first flow path 125 extends in the first direction (X-axis direction), and after that, when the first flow path 125 reaches the other end of the first plate 120, the first flow path 125 is bent in a direction parallel to the first direction (X-axis direction) and then extends again in the first direction (X-axis direction). That is, the first flow path 125 may be formed in a zig-zag shape between the plurality of cell units 110 and the bottom plate .

As described above, when the first flow path 125 forms zig-zags between the plurality of cell units 110 and the bottom plate 120, the fire-extinguishing agent flowing through the first flow path 125 may circulate between the plurality of cell units 110 and the bottom plate along the first flow path 125 in zig-zags. As a result, the battery cell 10 of which the temperature rises due to the heat generated during the charging/discharging processes of the battery cell 10 is cooled down by the cold fire-extinguishing agent in a heat exchanging method, and thus, stability of the battery module 100 may be improved.

In addition, referring to FIG. 5, the first plate 120 may further include a first connector 127a and a second connector 127b connecting the first flow path 125 and the second flow path 135 to each other. The first flow path 125 may be connected to the first connector 127a after circulating through half of the first plate 120. The first connector 127a is bent from the first direction (X-axis direction) in a third direction (Z-axis direction) that is perpendicular to the first direction (X-axis direction) and the second direction (Y-axis direction), and after that, it is bent in a direction that is parallel to the first direction (X-axis direction) again to be connected to the second flow path 135. Here, the fire-extinguishing agent may have an increased potential energy by flowing in the third direction (Z-axis direction) via the first connector 127a. The increasing potential energy of the fire-extinguishing agent may be supplied by a pressure supplied to the fire-extinguishing agent from the supply portion 150. In an alternative embodiment, the first connector 127a may include a device for supplying a work. For example, the first connector 127a may include a pump that may increase the potential energy of the fire-extinguishing agent.

The second flow path 135 may extend in the direction (e.g., the -X-axis direction) that is parallel to the first direction (X-axis direction) between the plurality of cell units 110 (see FIG. 4). However, the present disclosure is not limited thereto, and the second flow path 135 may have any kind of shape provided that the second flow path 135 penetrates between the plurality of cell units 110 across the plurality of cell units 110.

In addition, the fire-extinguishing agent flowing through the first flow path 125 and the second flow path 135 may include a material that absorbs heat as evaporative latent heat to cool down the battery module 100 when a thermal runaway occurs in the battery module 100. Alternatively, the fire-extinguishing agent may include a suffocating fire-extinguishing material that extinguishes fire by blocking oxygen.

The first flow path 125 and the second flow path 135 are flow paths through which the fire-extinguishing agent circulates, and the first and second flow paths 125 and 135 may be melted by the heat during the thermal runaway of the battery cell 10. Therefore, the first flow path 125 and the second flow path 135 may include a material having a melting point that is lower than a thermal runaway temperature of the battery cell 10. For example, the first flow path 125 and the second flow path 135 may include at least one of polyamide (PA), polycarbonate (PC), polyether ether ketone (PEEK), polyether ketone ketone (PEKK), polyphenylene sulfide (PPS), polyether imide (PEI), polyether sulfone (PES), or polyimide (PI).

When the first flow path 125 and the second flow path 135 include a material having a melting point that is lower than a thermal runaway temperature of the battery cell 10, the first flow path 125 and the second flow path 135 are melted around the battery cell 10 in which the thermal runaway has occurred and may immerse the corresponding battery cell 10 in the fire-extinguishing agent flowing through the first and second flow paths 125 and 135.

In detail, the first flow path 125 is located on the lower surface of the battery cell 10, and thus, is melted when the thermal runaway occurs in a certain battery cell 10 and immerses the corresponding battery cell 10 in the fire-extinguishing agent to extinguish the thermal runaway of the battery cell 10. Also, because the second flow path 135 extends between the plurality of cell units 110, the second flow path 135 is melted during a thermal runaway of a certain battery cell 10 and sprays the fire-extinguishing agent to the battery cell 10 in which the thermal runaway has occurred to extinguish the thermal runaway of the battery cell 10.

As described above, because the battery module 100 according to one or more embodiments of the present disclosure includes the first flow path 125 and the second flow path 135 in which the same fire-extinguishing agent circulates, the battery module 100 may instantly extinguish the thermal runaway, thereby improving the stability of the battery module 100.

In addition, the second flow path 135 may be arranged within a range of 30% to 90% of the height of the battery cell 10. Because the second flow path 135 is arranged within the range of 30% to 90% of the height of the battery cell 10, the second flow path 135 may be instantly melted around a certain battery cell 10 in which the thermal runaway has occurred, and may spray the fire-extinguishing agent to the corresponding battery cell 10 to reduce the temperature. Then, the fire may be extinguished and the heat transfer to adjacent battery cells 10 may be blocked.

In addition, the second flow path 135 may be fixed to the second plate 130. Also, the second flow path 135 may be exposed to outside of the second plate 130. For example, as shown in FIG. 7, the second plate 130 may include a first region 130a on which the second flow path 135 is seated and a second region 130b covering the second flow path 135.

A shape of an upper surface of the first region 130a may be engaged with a shape of a lower surface of the second flow path 135 so that the second flow path 135 may be stably seated thereon. That is, the shape of the upper surface of the first region 130a may be convex downward. Also, the shape of the lower surface of the second region 130b may be engaged with the shape of the upper surface of the second flow path 135 so that the second region 130b covers the second flow path 135 and fixes the second flow path 135 along with the first region 130a.

As described above, because the second flow path 135 is exposed out of the second plate 130, when the thermal runaway occurs in any one battery cell 10, the second flow path 135 is rapidly melted and sprays the fire-extinguishing agent to the battery cell 10 to extinguish the fire.

In addition, the fire-extinguishing agent passing between the plurality of cell units 110 through the second flow path 135 may flow to the first flow path 125 after passing through the second connector 127b connected to the second flow path 135. A shape of the second connector 127b may be symmetrical with a shape of the first connector 127a described above based on a virtual line in the third direction (Z-axis direction).

The fire-extinguishing agent flowing into the first flow path 125 circulates and zig-zags along the first flow path 125 between the plurality of cell units 110 and the bottom plate as described above, and then, may flow in the direction toward the supply portion 150 through the outlet 122. Also, the outlet 122 and the supply portion 150 may be connected to each other via an outlet flow path 152.

In addition, the fire-extinguishing agent flowing in through the supply portion 150 may flow out to the supply portion 150 via an inlet flow path 151, the inlet 121, the first flow path 125, the second flow path 135, the first flow path 125, the outlet 122, and the outlet flow path 152. In this case, the heat generated during the charging and discharging processes of the battery cells 10 may be absorbed by the fire-extinguishing agent to cool down the battery cells 10. As a result, the temperature of the fire-extinguishing agent flowing in the first flow path 125 at the side of the inlet 121 may have a lower temperature than that of the fire-extinguishing agent flowing in the first flow path 125 at the side of the outlet 122. Accordingly, the supply portion 150 may include a cooling device that cools the fire-extinguishing agent that has circulated through the battery module 100.

As described above, the fire-extinguishing agent may cool down the plurality of battery cells 10, along with the first plate 120 and the second plate 130 performing the heat dissipating function. As a result, the thermal runaway of the plurality of battery cells 10 may be prevented in advance, and the stability of the battery module 100 may be improved.

In addition, the battery module 100 according to one or more embodiments of the present disclosure may further include a pressure sensor 153 located between the supply portion 150 and the first flow path 125 and a controller arranged in the supply portion 150. The pressure sensor 153 may be located at the side of the outlet 122 of the first flow path 125. For example, the pressure sensor 153 may be located on the outlet flow path 152 connecting the supply portion 150 to the first flow path 125 and may measure a pressure of the fire-extinguishing agent flowing in the outlet flow path 152. However, the pressure sensor 153 may be located at various positions where the pressure of the flow path in which the fire-extinguishing agent flows may be measured.

When the thermal runaway occurs in the battery cell 10, as described above, the first flow path 125 and the second flow path 135 may be melted so as to spray the fire-extinguishing agent flowing therein to the battery cells 10. In this case, because the fire-extinguishing agent flowing in the first flow path 125 and the second flow path 135 is sprayed, the pressure of the fire-extinguishing agent flowing in the outlet flow path 152 may decrease. That is, the pressure of the fire-extinguishing agent flowing in the outlet flow path 152, which is measured by the pressure sensor 153, may decrease.

When the pressure of the fire-extinguishing agent flowing in the outlet flow path 152 decreases, the pressure sensor 153 may transmit to the controller in the supply portion 150 a signal indicating that the measured pressure of the fire-extinguishing agent has decreased. Accordingly, the controller receiving the above signal may identify that the thermal runaway occurs in the battery cell 10 and may command the supply portion 150 to supply more fire-extinguishing agent to the first flow path 125 and the second flow path 135.

As a result, a large amount of fire-extinguishing agent flows in the first flow path 125 and the second flow path 135 from the supply portion 150, and then, the fire-extinguishing agent may be largely sprayed toward the battery cell 10 in which the thermal runaway occurs and may effectively extinguish the thermal runaway. As described above, because the battery module 100 according to one or more embodiments of the present disclosure includes the pressure sensor 153 located between the supply portion 150 and the first flow path 125 and the controller in the supply portion 150, the thermal runaway in the battery cell 10 may be instantly sensed without using an additional sensor such as a gas sensor, etc., and then, the fire-extinguishing agent supplied to the first flow path 125 and the second flow path 135 may be increased automatically and controls the thermal runaway rapidly, thereby improving the stability of the battery module 100.

In addition, the second plate 130 may further include a plurality of insulating units 137 that partially cover the second flow path 135 and are spaced apart from one another. The plurality of insulating units 137 may include a material having excellent heat insulating property, for example, at least one of polyurethane, closed cell extruded polystyrene foam (e.g., Styrofoam), mica, silica aerogel, ceramic fiber, or polyimide, but is not limited thereto.

For example, the plurality of insulating units 137 may be attached to the second plate 130 so as to partially cover the second flow path 135. FIG. 6 shows the plurality of insulating units 137 formed in rectangular films and attached onto the second plate 130, but the plurality of insulating units 137 may have any kind of shape and arrangement provided that the second flow path 135 may be partially covered by the insulating units 137. In another example, the plurality of insulating units 137 may be arranged to partially surround the second flow path 135.

As described above, when the second plate 130 includes the plurality of insulating units 137, regions 138 in the second flow path 135, which are not covered by the plurality of insulating units 137, may be intensively melted. Therefore, the region 138 near the battery cell 10 in which the thermal runaway occurs is intensively melted, and the fire-extinguishing agent flowing in the second flow path 135 may be sprayed to the battery cell 10 having the thermal runaway at a high pressure, and then, the thermal runaway may be effectively extinguished.

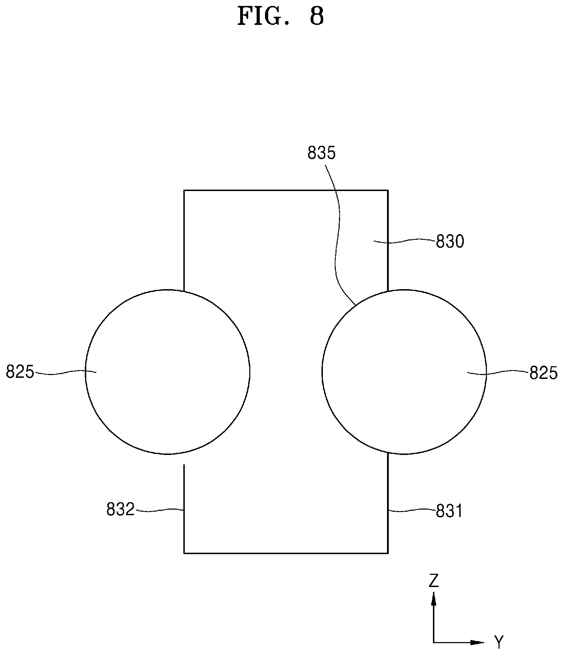

FIG. 8 is a cross-sectional view showing another example of a second plate and a second flow path seen in a first direction (X-axis direction).

Referring to FIG. 8 along with FIGS. 4 and 5, a battery module according to another embodiment of the present disclosure may include a second plate 830 including a plurality of second flow paths 825 that extend in a direction (X-axis direction or -X-axis direction) parallel to the direction (X-axis direction) in which the plurality of cell units 110 are arranged, between the plurality of cell units 110. For example, the second plate 830 between the plurality of cell units 110 may be arranged to come into contact respectively with two second flow paths 825. Also, the two second flow paths 825 may be fixed to the second plate 830, and the second flow paths 825 may be passages through which the fire-extinguishing agent flows.

For example, the two second flow paths 825 may be inserted respectively into one side 831 of the second plate 830 and the other side 832 of the second plate 830. The second plate 830 may further include concave portions 835 that are recessed into the second plate 830 so that the second flow paths 825 may be inserted. Also, the two second flow paths 825 may be exposed to outside of the second plate 830, respectively.

The first connector 127a described with reference to FIGS. 4 and 5 may be branched into two first connectors. Consequently, the first flow path 125 may be connected to the two second flow paths 825 via the two first connectors. That is, the fire-extinguishing agent passed through the first flow path 125 may be branched and flow into the two second flow paths 825. Also, the two flow paths 825 may respectively come into contact with the plurality of cell units 110.

In this case, an exposed area of the second flow path 825 out of the second plate 830 may increase. Consequently, when a thermal runaway occurs in one battery cell 10, the second flow paths 825 exposed out of the second plate 830 are rapidly melted to spray the fire-extinguishing agent flowing in the second flow paths 825 to the battery cell 10, and may effectively extinguish the thermal runaway. Also, the two second flow paths 825 come into contact respectively with the plurality of cell units 110, and thus, the battery cell 10 in which the thermal runaway occurs is instantly extinguished and the stability of the battery module may be improved.

In addition, as shown in FIG. 8, the number of the second flow paths 825 arranged between the plurality of cell units 110 is two. However, as necessary, a plurality of second flow paths 825 (i.e., more than two) may be provided.

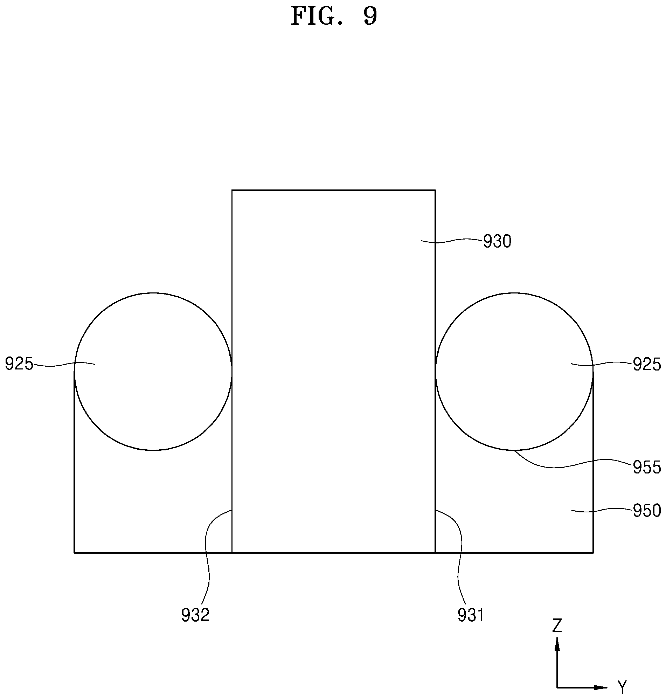

FIG. 9 is a cross-sectional view showing another example of a second plate and a second flow path seen in the first direction (X-axis direction).

Referring to FIG. 9 along with FIGS. 4 and 5, a battery module according to another embodiment of the present disclosure may include a second plate 930 including two second flow paths 925 that extend in a direction (X-axis direction or -X-axis direction) parallel to the direction (X-axis direction) in which the plurality of cell units 110 are arranged between the plurality of cell units 110, and two spacers 950 fixing the second flow paths 925. The two second flow paths 925 may be passages through which the fire-extinguishing agent flows.

The two spacers 950 may be arranged between the plurality of cell units 110 to come into contact with one side 931 and the other side 932 of the second plate 930. Also, the spacers 950 may be located between the plurality of cell units 110. Also, the spacers 950 may extend in the direction (X-axis direction), in which the battery cells 10 are arranged, so as to correspond to the length of the cell units 110.

In addition, the two spacers 950 may respectively include seating portions 955 on which the second flow paths 925 may be stably seated. The shape of the seating portion 955 may be engaged with the shape of a lower surface of the second flow path 925.

As described above, when the two spacers 950 on which the two second flow paths 925 may be seated are provided between the plurality of cell units 110, an additional process for forming grooves in which the second flow paths 925 are inserted or fixed in the second plate 930 may not be performed. Thus, the processes of manufacturing the battery module may be simplified.

Also, because the spacers 950 fix the second flow paths 925, a risk of interference between the second flow paths 925 and other components in the battery module may be reduced when assembling the second flow paths 925 with the battery module, and accordingly, the structural stability of the battery module may be improved. Also, the spacers 950 are disposed between the cell units 110, and thus, when a thermal runaway occurs in the battery cell 10 included in one of the cell units 110, the heat transfer to another cell units 110 may be prevented.

According to the embodiments of the present disclosure, because the battery module includes the first plate including the first flow path in which the fire-extinguishing agent circulates and the second plate including the second flow path in which the fire-extinguishing agent circulates, the fire-extinguishing agent may be instantly sprayed from the first flow path and the second flow path during the thermal runaway of the battery module, and then, the thermal runaway in the battery module may be extinguished and the stability of the battery module may be improved.

Also, because the first plate and the second plate include the material having excellent heat dissipating performance, the heat-dissipating performance of the battery module may be improved.

Effects obtainable from the present disclosure may be non-limited by the above-mentioned effect. Other unmentioned effects may be clearly understood from the following description by one of ordinary skill in the art to which the present disclosure pertains.

The present disclosure has been described in detail. However, it should be understood that the detailed description and specific examples, while indicating preferred embodiments of the disclosure, are given by way of illustration only, since various changes and modifications within the scope of the disclosure will become apparent to one of ordinary skill in the art from this detailed description.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery module, comprising:
a plurality of battery cell units, each battery cell unit including a plurality of battery cells in parallel in a first direction, the plurality of battery cell units being aligned in a second direction perpendicular to the first direction;
a housing accommodating the plurality of battery cell units, the housing including a bottom plate;
a first plate between the plurality of cell units and the bottom plate, the first plate including a first flow path; and
a second plate between the plurality of cell units, the second plate including a second flow path connected to the first flow path,
wherein a same fire-extinguishing agent flows in the first flow path and the second flow path.

2. The battery module as claimed in claim 1, further comprising a supply portion connected to the first flow path, the supply portion supplying the fire-extinguishing agent.

3. The battery module as claimed in claim 2, further comprising a pressure sensor between the supply portion and the first flow path.

4. The battery module as claimed in claim 3, wherein
the pressure sensor is at an outlet of the first flow path.

5. The battery module as claimed in any one of the preceding claims, wherein the second flow path extends between the plurality of cell units in a direction parallel to the first direction, the second flow path being fixed to the second plate.

6. The battery module as claimed in claim 5, wherein the second flow path is exposed to an exterior of the second plate.

7. The battery module as claimed in any one of the preceding claims, wherein the second flow path is between 30% to 90% of a height of each of the plurality of cell units.

8. The battery module as claimed in any one of the preceding claims, wherein the second plate further includes a plurality of insulating units partially covering the second flow path, the plurality of insulating units being spaced apart.

9. The battery module as claimed in any one of the preceding claims, wherein the second plate is perpendicular to the first plate.

10. The battery module as claimed in any one of the preceding claims, wherein the second flow path is configured to spray the fire-extinguishing agent.

11. A battery module, comprising:
a plurality of battery cell units, each battery cell unit having a plurality of battery cells in parallel in a first direction, the plurality of battery cell units aligned in a second direction perpendicular to the first direction;
a housing accommodating the plurality of battery cell units, the housing including a bottom plate;
a first plate between the plurality of cell units and the bottom plate, the first plate including a first flow path for a fire-extinguishing agent to flow;
a supply portion connected to the first flow path, the supply portion supplying the fire-extinguishing agent; and
a pressure sensor between the supply portion and an outlet of the first flow path.

12. The battery module as claimed in claim 11, further comprising a second plate between the plurality of cell units, the second plate including a second flow path connected to the first flow path.

13. The battery module as claimed in claim 12, wherein the second plate is perpendicular to the first plate.

14. The battery module as claimed in claim 12 or claim 13, wherein the same fire-extinguishing agent flows in the first flow path and the second flow path.

15. The battery module as claimed in any one of claims 12 to 14, wherein the second flow path extends between the plurality of cell units in a direction parallel to the first direction, the second flow path being fixed to the second plate.
